# DEMANDE DE BREVET EUROPEEN

(11) **EP 0 695 502 A1**
(43) Date de publication de la demande: **07.02.1996**
(21) Numéro de dépôt: 95401364.5
(22) Date de dépôt: 13.06.1995
(51) Int. Cl.: A01N 37/06

(54) **Compositions insecticides à base d'undecylenate de méthyle**

(30) Priorité: 14.06.1994 FR 9407237
(71) Demandeur: ELF ATOCHEM S.A., F-92800 Puteaux (FR)
(72) Inventeur: Regnault-Roger, Catherine, F-64000 Pau (FR); Caupin, Henri-Jean, F-78000 Versailles (FR)

(57) **Abrégé**

Composition insecticide comprenant une substance insecticide, autre que du 10-undécylénate de méthyle, caractérisée en ce qu'elle comprend du 10-undécylénate de méthyle.

## Description

On sait déjà que le 10-undécylénate de méthyle de formule 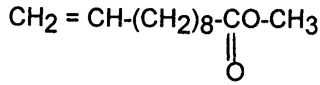
désigné ci-après en abrégé par C11 a une action permettant de lutter contre les insectes sur la laine (Chemical Abstracts, vol. 98, n°25, Columbus, Ohio, U.S.-20 juin 1986).

Or, on a maintenant trouvé qu'une composition insecticide comprenant une substance insecticide autre que le C11 est bien plus active lorsqu'elle est additionnée du C11.

Le C11 a un effet attractif, en sorte que la composition comprenant, à la fois, une substance insecticide autre que le C11 et le C11 présente un effet de synergie, le C11 attirant les insectes et les immobilisant à proximité de l'autre insecticide à action rapide. L'effet attractif permet de masquer l'effet répulsif des autres substances insecticides. Il s'y s'ajoute une activité antinutrionnelle, ainsi qu'une inhibition de la reproduction par diminution de la fécondité, effet ovicide et larvicide limitant le renouvellement des générations, l'ensemble des effets se conjuguant pour amoindrir le flux des insectes.

L'invention s'applique tout particulièrement à l'encontre des insectes ravageurs de denrées stockées, tels que les coléoptères et les aphides.

Il est en outre recommandé d'ajouter à une composition du C11 et d'un insecticide autre que le C11 et qu'un polyphénol, un polyphénol.

Comme polyphénols, on utilise avantageusement ceux de formule 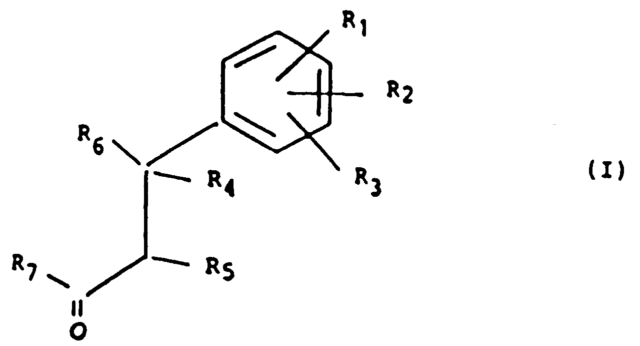
dans laquelle
R₁, R₂ et R₃, qui sont identiques ou différents, sont un atome d'hydrogène, un hydroxy ou un alcoxy inférieur, deux au moins de R₁, R₂ et R₃ étant autre qu'un atome d'hydrogène,
R₄ est un atome d'hydrogène, R₅ est un atome d'hydrogène, un hydroxyle, un alcoxy ou un glycoside ou R₄ et R₅ forment ensemble une liaison de valence supplémentaire entre les atomes de carbone qui les portent,
R₆ est un atome d'hydrogène,
R₇ est hydroxyle, alcoyle inférieur ou phényle, éventuellement mono-, di- ou trisubstitué par des radicaux alcoyle inférieurs, alcoxy inférieurs ou hydroxyle, ou
R₆ et R₇ forment ensemble un radical bivalent de formule 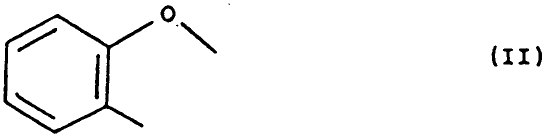
relié par l'atome d'oxygène à l'atome de carbone portant R₄.

Par alcoyle ou alcoxy inférieur, on entend des radicaux linéaires ou ramifiés ayant de 1 à 6 atomes de carbone et, de préférence, de 1 à 4 atomes de carbone.

Parmi ces polyphénols, on peut citer notamment des catéchines, des flavanones, des flavones, des flavanonols, des flavonols et autres flavonoïdes de formes monomères ou associées en diméres ou polymères. On peut citer notamment l'acide caféique, l'acide férulique, l'acide gallique, et autres acides phénols dérivés de l'acide cinnamique ou de l'acide benzoïque, la catéchine, la quercétine, la rutine, la naringine. La rutine, l'acide caféique et la naringine sont très attractifs et provoquent une forte inhibition de la motricité naturelle des insectes et c'est pourquoi ils sont tout particulièrement préféré.

L'effet attractif des polyphénols est tel qu'ils augmentent la consommation par les insectes du mélange toxique, en permettant de diminuer les concentrations efficaces de chacun des composés insecticides.

Ces polyphénols sont des substances naturelles d'origine végétale que l'on trouve dans l'alimentation quotidienne et qui sont, par définition, aux doses efficaces sur les insectes atoxiques pour les mammifères et biodégradables. Les polyphénols permettent donc, associés à une autre substance insecticide elle aussi biodégradable et atoxique et de préférence naturelle, de constituer une composition insecticide ne portant pas atteinte à l'environnement. C'est pourquoi, suivant un mode de réalisation préféré de la composition suivant l'invention, la substance insecticide autre que le C11 est un terpène. Les terpènes sont des hydrocarbures des séries aliphatiques et cyclaniques dont la constitution s'exprime par des formules obtenues par assemblage de chaînons isopréniques. On peut utiliser des hydrocarbures terpéniques acycliques en C₁₀H₁₆ possédant la structure du diméthyl-2,6-octane, des hydrocarbures terpéniques vrais en C₁₀H₁₆ et des hydrocarbures sesquiterpéniques en C₁₅H₂₄. On préfère notamment les terpènes monocycliques et les terpènes bicycliques. Parmi les terpènes, on peut citer le menthane, le limonène, le cymène, les terpinènes, I'eugénol, le pinène, le sabinène, le carène. Les terpènes peuvent porter une fonction alcool, comme le linalool, le menthol, le terpinéol, une fonction cétone, comme la menthone, la carvone, la thuyone, le camphre, une fonction aldéhyde comme le safranal, le géranial, le cynamaldéhyde, le cuminaldéhyde ou une fonction phénol comme le thymol, le carvacrol, éventuellement méthoxylée comme l'anéthol, I'eugénol, l'estragol, le bornéol. On préfère tout particulièrement l'eugénol, le terpinéol et le carvacrol et, à un moindre degré, le thymol, le linalool, I'anéthol, I'arminaldéhyde, le cynamaldéhyde et le cymène.

On associe au C11 seul ou additionné d'un polyphénol une substance insecticide classique, comme des acides gras et dérivés qui sont des acides carboxyliques dont la chaîne aliphatique est suffisamment longue pour leur conférer un caractère lipophile, cette chaîne étant en général constituée de 10 à 20 atomes de carbone et être saturée ou mono- ou poly-insaturée. Les acides gras peuvent être utilisés sous la forme libre, sous la forme salifiée, le cation pouvant être un métal alcalin ou un métal alcalino-terreux, sous forme estérifiée, généralement avec un alcool aliphatique, ou sous la forme d'un glycéride tel qu'un mono-, un di- ou un triglycéride. On peut également associer au C11, à titre de substance insecticide, un carbamate, un pyréthrinoïde, un composé organophosphoré ou un composé organochloré. De préférence, on associe un autre insecticide au couple C11 et terpène.

De préférence, le rapport pondéral entre la (ou les) substance(s) insecticide(s) autre(s) que le C11 et le C11 est compris entre 1/1000 et 1/10. Quand on utilise une composition ternaire, renfermant du C11, un polyphénol et un insecticide autre que le C11 et qu'un polyphénol, le rapport pondéral C11 + polyphénol/insecticide autre que C11 et que polyphénol est compris entre 1/1000 et 1/10 et le rapport C11/polyphénol est compris entre 0,1 et 10. On obtient la composition en mélangeant les constituants.

La composition insecticide suivant l'invention permet de lutter non seulement contre les insectes proprement dits, mais concerne plus généralement tout le sous-règne des métazoaires et, en particulier, l'embranchement des arthropodes, parmi lesquels figurent les arachnides, par exemple, Tetranycus urticae, famille Trombididae, ordre acarien. Mais la classe-cible préférée est celle des insectes parmi laquelle figurent (classification selon BALACHOWSKY) 1962 l'ordre des Blattidés, notamment:
- genre Blatella espèce B. germanica, B. orientalis (blattes),
- genre Ectobius espèce E. lapponicus (blatte forestière).

L'ordre des Hyménoptères, notamment
- *famille Formicidae (fourmis),
- genre Camponotus, espèces C. femoratus, C. lignaperda (fourmi charpentière),
- genre Formica, espèce F. polyctena (fourmi rousse), F. fusca,
   *famille Myrcidae,
- genre Myrmica, espèce M. rubra (fourmi rouge),
- genre Monomorium, espèce M. pharaonis (fourmi des pharaons).

Mais surtout
* l'ordre des Diptères, avec les familles des
   - Drosophilidae, genre Drosophila (exemple: espèces D. melanogaster, mouche du vinaigre, D. auraria),
   - famille des Muscidae, genre Musca, espèce M. domestica (mouche domestique),
   - famille des Trypetidae, genre Ceratitis, espèce C. capitata (mouche méditerranéenne des fruits et légumes)
   - famille Culicidae, genre Culex, C. pipiens (moustique) ou autres moustiques exemple: Aedes aegypti vecteurs de la fièvre jaune.
* l'ordre des Coléoptères, sous-ordre Polyphaga, avec les super-familles.
   - Cucujoidea dont les familles de Coccinellidae, sous famille des Epilachninae (larves phytophages des fruits et légumes), espèces E. chrysomelina, E. varivestis, E. similis,
   - famille des Mordellidae, genre Mordellistena, M. parvula (ravageur du tournesol, chanvre),
   - famille Tenebrionidae,
   - genre Tribolium, espèce Tribolium castaneum, T. confusum (ravageurs des grains et farine type blé, orge),
   - genre Tenebrio, espèces T. molitor, T. obscurus F (vers de la farine)
   - Super-famille Bostrychoidea dont la famille des Bostrychidae, (genre Rhizoperta, R. dominica (capucin des grains),
   - Super-famille Scarabaeoidae, par exemple famille Scarabaeidae, sous-famille Rutelinae, genre Popillia japonica (hanneton japonais),
   - Super-famille Phytophagoidea, dont:
   - famille Bruchidae,
      sous-famille Bruchinae,
* genre Acanthoscelides, espèce A, obtectus (bruche du haricot)
* genre Bruchus, espèce Bruchus lentis (bruche des lentilles),
* genre Callosobruchus, espèce C. maculatus (bruche à 4 taches), C. chinensis (bruche chinoise),
   sous-famille Amblycerinae
* genre Zabrotes, espèce Z. fasciatus (bruche légumineuses),
   - famille Chrysomelidae
      sous-famille Crysomelidae, genre Leptinotarsa, espèce L. decemlineata (doryphore de la pomme de terre),
   - famille Curculonidae,
      sous-famille Tanymecinae, genre Tanymecus, espèce T. palliatus (charançon polyphage),
   - sous-famille Curculioninae,
      tribu Trichiini, genre Tychius, espèce T. quinquepunctatus (trichie des légumineuses), T. Fasciatus,
      tribu des Calandini, genre Sitophilus, espèces S. granarius, S. oryzae, S. zeamais (charançon des blés, riz et maïs).

Ordre des Lepidoptéres :
Sous-ordre des Heteroneura
- sous-division Heterocera
*** dont super-famille: Pyraloidea par exemple:
famille Pyralidae
- sous-famille Pyraustinae
   genre Ostrinia
   espèce: Ostrinia nubilalis Hb (pyrale du maïs)
   genre Loxostege, espèce L. Sticticalis (pyrale de la betterave)
   genre Evergestis frumentalis (pyrale du chou)
- sous-famille Galleriinae
   genre Ephestia
   espèce E.Cautella, E.kuenhniella (pyrale des fruits desséchés et de la farine)
- super-famille (Noctuoidea) par exemple:
   famille Noctuidae
   groupe Trifides
- sous-famille Amphipyrinae
- genre Sesamia
   espèce Sesamia nonagrioides Lef. (sésamie du maïs)
   - genre Spodoptera
      espèces : Spodoptera litura Fab.
      Spodoptera littoralis Bois du Val (ravageur des fruits et légumes) sous-famille Melicleptriinae
   - genre Helicoverpa (ou Heliothis)
      espèce H. zea Hb.
      Super-famille Tineoidea: par exemple:
      famille Gelichiidae dont:
   - genre Sitotroga
      espèce Sitotroga cerealla OL. (alucite des céréales).

On peut utiliser la composition suivant l'invention pour protéger les cultures en plein champ. On applique la composition suivant l'invention à raison de 100 à 1000 grammes par hectare.

On peut formuler également les compositions pour un usage domestique dont on donne un exemple ci-dessous: un atomiseur de 650 ml de volume total, rempli à 500 ml utiles, a un poids net de 300 grammes et contient:
- propulseur (butane) : 250 grammes
- polyphénol : 0,4gramme
- C11 0,5 gramme
- terpènes : 0,1 gramme
- parfum : 0,5 gramme
- agent tensio-actif : 1,5 grammes
- agent viscosifiant : 0,025 gramme
- alcool éthylique à 50%: 47 grammes

on prépare cette composition de la manière suivante: on réalise une solution hydroalcoolique à 50% en poids dans laquelle on solubilise les tensions-actifs (éthoxylat 10 OE d'acide undécylènique et éthoxylat 10 OE d'acide ricinoléique), puis ensuite le C11, les polyphénols, les terpènes et le parfum; le mélange est émulsionné, on lui ajoute ensuite une solution aqueuse de gomme viscosifiante.

Les atomiseurs sont remplis à raison de 50 grammes de cette émulsion à laquelle on ajoute 250 g de butane ou d'un autre gaz propulseur. (OE signifie oxyde d'éthylène).

On peut utiliser également les compositions pour les revêtements protecteurs externes ou internes (tous domaines par exemple: électricité, construction légère à usage terrestre ou aquatique) et les emballages tous domaines, notamment alimentaires à destination des aliments mais aussi agronomiques: encapsulation des biopesticides, godets pour plants végétaux, films de polymères biodégradables à destinations multiples.

Les expérimentations suivantes illustrent l'invention.
**1ère expérimentation** : pouvoir insecticide et attractif du C11
Deux compartiments distincts de volume 465 cm³ chacun sont reliés entre eux par un tube de verre de section 1,5 cm et d'une longueur de 10 cm. Dans le premier compartiment, on dépose le produit dont on veut tester l'activité et dans le deuxième les insectes dont on veut éprouver la sensibilité. La circulation des insectes et des gaz est assurée par le tube de verre ci-dessus décrit.
Dans cette expérience, on dépose dans le premier compartiment (A), une chambre de fumigation, inaccessible aux insectes par un treillis et contenant 4,43 mg (5µl) d'undécylénate de méthyle (C11), imprégné sur du papier Whatman n°1. Dans le deuxième compartiment (B) évolue une population d'insectes de 20 individus adultes d'*Acanthoscelides obtectus Say* (bruchidae, coléoptère) bruche du haricot, *Phaseolus vulgaris* L. Au bout de 4h, 20% des insectes se retrouvent dans le compartiment A, 50% au bout de 5 heures, 60% au bout de 8 heures et 70% au bout de 24 heures. Cette proportion reste stable par la suite. Tous les insectes restent vivants les 12 premières heures, mais on note dans le compartiment où se trouve la chambre de fumigation 20% d'insectes morts au bout de 24 heures tandis qu'on retrouve, au bout de 48 heures, 30% de morts dans le compartiment A, et 10% dans le compartiment B. Les expérimentations réalisées avec le lot témoin ne comportent pas d'insectes morts et la migration est significativement différente : 30% d'insectes dans le compartiment A et 70% dans le compartiment B. Pour un composé témoin, la répartition est égale entre les deux compartiments (50%/50%) et aucun mort n'est dénombré.
Un deuxième type d'expérience est réalisé selon le montage inverse : les insectes sont déposés dans le compartiment A contenant la chambre de fumigation et on dénombre le nombre des insectes fuyant ce compartiment et se réfugiant dans le compartiment B. 80 % des insectes restent dans le premier compartiment et seuls 20 % ont migrés dans l'autre compartiment au bout de 4 heures, la proportion restant stable les 48 heures suivantes. On dénombre dans le compartiment A 20% de morts au bout de 24 heures. Le composé témoin éthoxy ne provoque aucune mort, la répartition des insectes se faisant comme précédemment à 50%/50% dans les compartiments.
L'ensemble de ces observations permet de déduire que le C11 possède un pouvoir attractif et insecticide. Les insectes se rendent ou restent dans le compartiment où se trouve le composé C11. La toxicité inhalatoire provoque la mort d'insectes ayant été attirés et se trouvant à proximité de la chambre de fumigation mais aussi après diffusion des vapeurs dans l'autre compartiment.
**2ème expérimentation** : toxicité inhalatoire sur *Acanthoscelides obtectus*, coléoptère, bruche du haricot
Soient trois séries de population de 20 insectes *Acanthoscelides* obtectus, bruche du haricot, mise chacune dans une chambre expérimentale en atmosphère confinée (volume 106 cm³). La chambre expérimentale contient une chambre de fumigation (rapport des volumes :40/1) fermé par un treillis et dans laquelle est déposé sur du papier Whatman les composés insecticides seuls ou en associations binaire ou ternaire. On dénombre les morts au bout de 24h. 1,05 mg de cinamaldéhyde, additionné de 50 mg de naringine, provoque 23% de morts, l'adjonction de 0,66 mg de C11 augmente cette proportion à 70%.
La présence de C11 renforce la toxicité du mélange binaire considéré.
**3ème expérimentation** : Toxicité sur le puceron des céréales, *Métapolophlum* *dirrhodum*, aphidès
Les pucerons sont déposés dans la chambre expérimentale ci-dessus décrite, sur leur support une jeune plantule de blé tendre. On incorpore 0,53 mg d'eugénol et 50 mg de naringine dans la chambre de fumigation, 25% de morts sont dénombrés au bout de 24h tandis que cette proportion augmente à 56% en présence de 8,86 mg de C11 et à 82,5% avec 17,7 mg.
La présence de C11 augmente le pouvoir insecticide.
**4ème expérimentation** : toxicité sur *Ephestla Cautella*, lépidoptère, mite du cacao et fruits séchés.
Le principe du dispositif expérimental demeure. En présence de 0,21 mg de linalol et 50 mg de naringine, on compte au bout de 24 h 10% de morts et 40% au bout de 48h. La présence de 4,43 mg de C11 permet de porter cette toxicité à 20% de morts pour 24h et à 60% au bout de 48h.
La présence de C11 augmente le pouvoir insecticide.
L'ensemble de ces 4 expérimentations montre que l'adjonction de C11 dans une formulation insecticide permet de renforcer la puissance insecticide de la composition. De plus, son incorporation dans une association ternaire permet d'élargir le spectre d'activité à d'autres insectes (Anoploures). Il intervient en outre utilement comme solvant et surfactant.
**5ème expérimentation** : synergie avec un carbamate
L'insecticide choisi est le pyrimicarbe, insecticide selectif, en solution à une concentration de 50g/l, l'insecte est *Acanthoscelides obtectus Say*, coléoptère phytophage.
On étudie la toxicité au bout de 24h de l'undécylénate de méthyle seul, du carbamate seul et d'une association équimoléculaire des deux composés. Les expériences sont réalisées en milieu confiné dans des chambres expérimentales de 106 cm³. Les résultats sont donnés dans le tableau 1.
On constate une synergie entre le carbamate et le C11 puisque leur association permet d'obtenir une mortalité supérieure: les CL50 du carbamate et du C11 sont respectivement de 3,16 µl/dm³ et 7,94 µl/dm³ tandis que celle du mélange équimoléculaire s'abaisse à 2,8 µl/dm³. Les résultats obtenus sont rassemblés au tableau I. 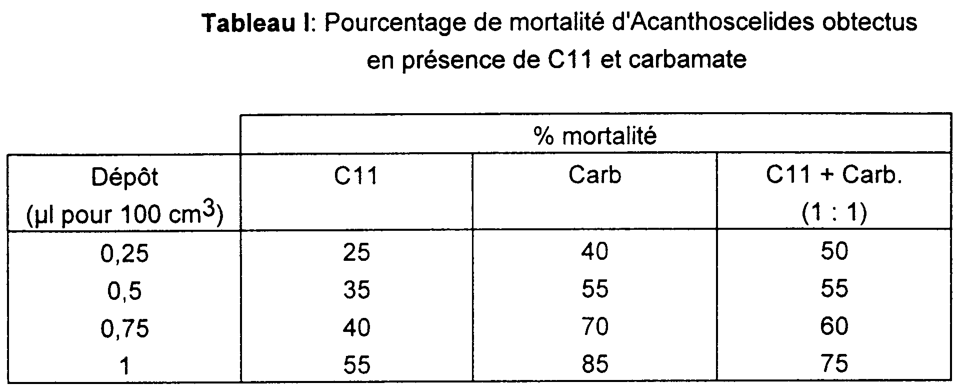
L'association des deux molécules permet donc de réduire les doses efficaces.
**6ème expérimentation** : synergie avec un pyréthrinoide
L'insecticide du commerce correspond à une solution comprenant 0,1 g/l de pyréthrinoide, 0,2 g de roténone et 1,5 g de butylate de pipéronyle comme synergisant. On détermine la toxicité sur des insectes adultes au bout de 24h en atmosphère confinée de la solution commerciale. La toxicité de cette solution est faible au regard de l'acide undécylénique.
Aussi choisi-t-on de comparer les toxicités des composés purs avec une association des composés dans laquelle la quantité de C11 augmente (Tableau II)
Dans les mêmes conditions expérimentales, on constate qu'une concentration de 40 µl de solution de pyréthrinoide provoque une mortalité de 25% et qu'une addition de C11 exalte le pouvoir insecticide de la solution de pyréthrinoide puisque les taux de mortalité sont compris entre 25% (pour 0,25 µl de C11 : dose en dessous du seuil d'efficacité, pas d'effet synergique) jusqu'à 70% pour l'association C11 / pyréthrinoide (1;40 µl) ; là encore on constate un effet synergique entre les deux composés.
Les résultats obtenus sont rassemblés au tableau II.

**Tableau II :**

| Pourcentage de mortalité d'Acanthoscelides obtectus en association avec des pyréthrinoides | | | | | |
|---|---|---|---|---|---|
| C11 | | Pyréthrinoides | | cm³ C11 + Pyr.(v;v)* | |
| Dépôt µl/100cm³ | % mortalité | Dépôt µl/100 cm³ | % mortalité | Dépôt µl/100 cm³ | % mortalité |
| 0,25 | 25 | 10 | 15 | 0,25 : 40 | 25 |
| 0,5 | 35 | 25 | 20 | 0,50 : 40 | 35 |
| 0,75 | 40 | 40 | 25 | 0,75 : 40 | 45 |
| 1 | 55 | 80 | 50 | 1 : 40 | 70 |

**7ème expérimentation** : effet d'associations trimoléculaires comprenant un polyphénol, le C11 et un autre insecticide
Cette expérimentation a pour but de définir l'incidence du pouvoir attractif de composés dans la toxicité de mélanges comprenant des insecticides.
Il convient donc d'adopter le dispositif expérimental suivant:
- Un appareil à deux compartiments est conçu d'un volume global de 1000 cm³. Les deux compartiments sont reliés par un tube de verre. Les insectes peuvent donc migrer d'un compartiment à l'autre. Le dispositif est vertical. L'atmosphère du système est confinée.
- On dépose les insectes dans un compartiment A et les produits dans l'autre compartiment B. Au bout d'un temps donné, on dénombre le nombre d'insectes ayant changé de compartiment ainsi que la mortalité.

Les appareils pendant la phase expérimentale sont conservés dans une pièce soumise à une hygrométrie de 65/75% et à une photopériode de 12h de lumière et 12h d'obscurité.
Un témoin ne contenant que des insectes est réalisé.
L'expérimentation est réalisée à des concentrations sub-létales afin d'examiner les différents phénomènes : effet attractif et exaltation de la toxicité.

### Résultats

Dans l'appareil témoin, les insectes, dans leur grande majorité, restent dans le compartiment d'origine (90%). Aucun ne meurt.

Dans l'appareil contenant 0,5g de naringine et dans celui ayant 8µl de C11, on constate que 70% des insectes changent de compartiment : les deux composés manifestent un pouvoir attractif.

Dans l'appareil contenant une association de naringine et de C11, 90% des insectes quittent leur compartiment d'origine A et demeurent dans le compartiment B contenant les produits.

L'adjonction d'une molécule de la famille des terpènes dont on connaît la toxicité sur l'insecte : par exemple le p-cyméne (5 µl), qui présente en outre peu de pouvoir attractif permet le dénombrement suivant (au bout de 22 h):

**Tableau III**

| produit s | | % d'insectes | |
|---|---|---|---|
| | compartiment A | | compartiment B |
| p-cymène | 70 | | 30 |
| | | aucun mort | |
| p-cymène + naringine | 60 | | 40 |
| | | aucun mort | |
| p-cymène + naringine + C11 | 30 | | 70 |
| | | dont 20% de morts | |

## Revendications

1. Composition insecticide comprenant une substance insecticide, autre que du 10-undécylénate de méthyle de formule 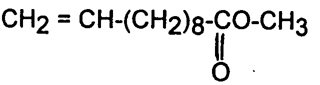 caractérisée en ce qu'elle comprend du 10-undécylénate de méthyle.

2. Composition suivant la revendication 1, caractérisé en ce qu'elle comprend, outre du 10-undécylénate de méthyle et un insecticide autre que le 10-undécylénate de méthyle et qu'un polyphénol, un polyphénol.

3. Composition suivant la revendication 2, caractérisée en ce que le polyphénol répond à la formule 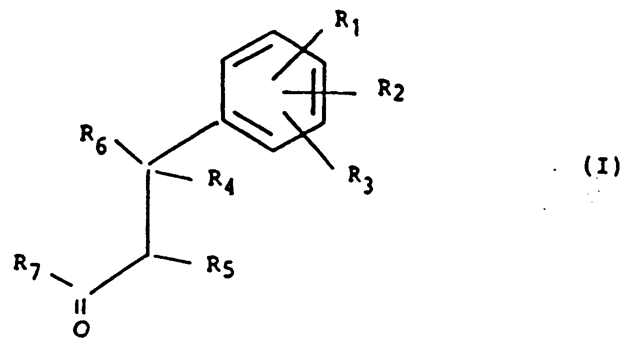 dans laquelle
R₁, R₂ et R₃, qui sont identiques ou différents, sont un atome d'hydrogène, un hydroxy ou un alcoxy inférieur, deux au moins de R₁, R₂ et R₃ étant autres qu'un atome d'hydrogène,
R₄ est un atome d'hydrogène, R₅ est un atome d'hydrogène, un hydroxyle, un alcoxy ou un glycoside, ou R₄ et R₅ forment ensemble une liaison de valence supplémentaire entre les atomes de carbone qui les portent,
R₆ est un atome d'hydrogène,
R₇ est un hydroxyle, alcoyle inférieur ou phényle éventuellement mono-, di-, ou trisubstitué par des radicaux alcoyle inférieurs, alcoxy inférieurs ou hydroxyle,
ou R₆ et R₇ forment ensemble un radical bivalent de formule 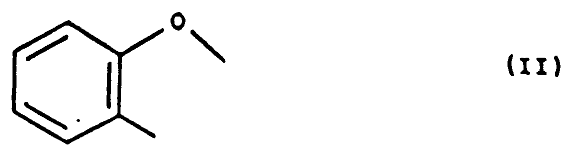 relié par l'atome d'azote à l'atome de carbone portant R₄.

4. Composition suivant la revendication 3, caractérisée en ce que le biphénol est la naringine, la rutine ou l'acide caféique.

5. Composition suivant l'une des revendications précédentes, caractérisée en ce que la substance insecticide, autre que du 10-undécylénate de méthyle, comprend un terpène.

6. Composition suivant la revendication 4, caractérisée en ce que le terpène est l'eugénol, le terpinéol, le carvacrol, le thymol, le linalool,l'anéthol, le cuminaldéhyde, le cynamaldéhyde ou le cymène.

7. Composition suivant l'une des revendications 1 à 4, caractérisée en ce que la substance insecticide, autre que du 10-undécylénate de méthyle, comprend un pyréthrinoïde, un carbamate, un composé organique chloré, un composé organique phosphoré ou un acide gras.

8. Composition suivant l'une des revendications précédentes, caractérisée en ce que le rapport pondéral de la substance insecticide, autre que du 10-undécylénate de méthyle, au 10-undécylénate de méthyle, est compris entre 1/10 et 1/1000.

9. Composition suivant la revendication 3, caractérisée en ce que le rapport pondéral entre le 10-undécylénate de méthyle et le polyphénol est compris entre 0,1 et 10.
